# EUROPÄISCHE PATENTANMELDUNG

(11) **EP 3 000 597 A1**
(43) Veröffentlichungstag der Anmeldung: **30.03.2016**
(21) Anmeldenummer: 15184327.3
(22) Anmeldetag: 08.09.2015
(51) Int. Cl.: B32B 17/10, B32B 38/18, B65H 23/038, B65H 35/00

(54) **VERFAHREN UND VORRICHTUNG ZUM AUTOMATISCHEN ABLEGEN EINER FOLIE BEI DER HERSTELLUNG VON VERBUNDSICHERHEITSGLAS**

(30) Priorität: 24.09.2014 DE 102014113845; 20.08.2015 DE 102015113865
(71) Anmelder: Bystronic Lenhardt GmbH, 75242 Neuhausen-Hamberg (DE)
(72) Erfinder: WELLNER, Rupert, 91602 Dürrwangen (DE); HARTMANN, Dieter, 64342 Seeheim-Jugenheim (DE)
(74) Vertreter: Twelmeier Mommer & Partner

(57) **Zusammenfassung**

Beschrieben wird ein Verfahren zum automatischen Zuführen einer thermoplastischen Kunststofffolie (2) von einer drehbar gelagerten Vorratsrolle (71) zu einer liegenden Glastafel (3) bei der Herstellung von Verbundsicherheitsglasscheiben mit folgenden Schritten: Definieren von zwei Maximalpositionen (M1, M2) für einen seitlichen Rand (81) der Folie (2) in einem Abstand senkrecht zu einer Außenkante (33) der Glastafel (3), zwischen denen sich der seitliche Rand (81) der Folie (2) nach dem Ablegen auf der Glastafel (3) befinden soll; Abrollen der Folie (2) von einer Vorratsrolle (71), auf der eine Folienbahn (2a) aufgewickelt ist, durch motorisches Drehen der Vorratsrolle (71); Hindurchführen zumindest eines seitlichen Randbereichs (81) der Folienbahn (2a) durch ein Walzenpaar (80), dessen Walzen (82, 83) mit veränderbarer Anpresskraft gegeneinander gepresst werden können und parallel zueinander liegende Drehachsen (84) aufweisen, welche parallel zur Folienbahn (2a) und schräg zur Laufrichtung (E) der Folienbahn (2a) orientiert sind; Motorisches Rotieren von zumindest einer der Walzen (83); Verändern der Anpresskraft der beiden Walzen (82, 83) während des Hindurchführens der Folienbahn (2a) durch das Walzenpaar (80), so dass der seitliche Rand (81) der sich in Laufrichtung (E) bewegenden Folie (2) zwischen den beiden zuvor definierten Maximalpositionen (M1, M2) bleibt; Führen der Folie (2) über die Glastafel (3); Stoppen des Drehens der Vorratsrolle (71) und der Drehbewegung der Walzen (82, 83) des Walzenpaares (80); Ablegen der Folie (2) auf die Glastafel (3); Abschneiden der auf der Glastafel (3) liegenden Folie (2) vom Vorrat (2a, 71); sowie eine Vorrichtung zum Durchführen des Verfahrens.

## Beschreibung

Die Erfindung geht aus von einem Verfahren und einer Vorrichtung zum Zuführen einer thermoplastischen Kunststofffolie von einer drehbar gelagerten Vorratsrolle zu einer liegenden, insbesondere horizontal liegenden, Glastafel bei der Herstellung von Verbundsicherheitsglasscheiben.

Ein derartiges Verfahren und eine derartige Vorrichtung sind aus der DE 20 2004 008 224 U1 bekannt. Die Folie wird von einer als "Coil" bezeichneten Vorratsrolle, auf der eine Folienbahn aufgewickelt ist, abgerollt. Es ist eine Abrolleinrichtung zum Aufnehmen der Vorratsrolle vorgesehen. Die Folie wird so über eine Folienabzugswalze geführt, dass die Folie die Abzugswalze mit einem gewünschten Umschlingungswinkel umschlingt. Die Folienabzugswalze ist bezüglich ihrer Umfangsgeschwindigkeit mit der Vorschubgeschwindigkeit der Glasscheibe, die auf einer Transportstrecke aufliegt, synchronisiert. Der Folienabzugswalze ist eine Besäumeinrichtung zugeordnet, welche Quetschmesser umfasst, welche ein Besäumen der Längskanten der Folien derart durchführen, dass die Quetschmesser gegen die Folienabzugswalze anliegen und drücken. Während des Transports der Glastafel auf der Transportstrecke wird die Folie auf der Glastafel abgelegt.

Ein Verfahren und eine Vorrichtung der eingangs genannten Art sind auch aus der DE 698 31 280 T2 bekannt. Eine Folienbahn ist auf einer frei drehbar gelagerten Vorratsrolle aufgewickelt und wird mittels eines Abzugswalzenpaares von der Vorratsrolle abgezogen. Das Abzugswalzenpaar enthält zwei aneinander gepresste Walzen mit parallel zueinander liegenden Drehachsen. Eine der Walzen des Abzugswalzenpaares ist von einem Antriebsmotor rotierbar. Die durch das Abzugswalzenpaar abgezogene Folienbahn wird vertikal nach unten durch eine Klemmvorrichtung, welche eine Schneideinrichtung zum Abschneiden der Folie quer zur Laufrichtung enthält, hindurch zu einer Greifvorrichtung für den vorderen Rand der Folie geführt. Die Greifvorrichtung für den vorderen Rand der Folie hält diesen in der Nähe einer der Außenkanten einer Glastafel fest, während ein Läufer mit einer frei drehbaren Umlenktrommel, welche von der Folienbahn V-förmig umschlungen wird, über die Glastafel hinweg verschoben wird, um einen vom Vorrat abgeschnittenen Folienabschnitt auf der Glastafel abzulegen. Der Zuführvorgang des vorderen Randes der Folie ausgehend von dem Abzugswalzenpaar erfolgt automatisch, indem der vordere Rand der Folie aufgrund der auf den vorderen Rand der Folie wirkenden Schwerkraft freihängend durch die Klemmvorrichtung hindurch bis in die geöffnete Greifvorrichtung hinein geführt wird.

Darüber hinaus ist es bei der Herstellung von Verbundsicherheitsglasscheiben üblich, eine Folie manuell auf eine liegende Glastafel abzulegen und dort durch manuelles Verschieben bezüglich der Glastafel auszurichten.

Der Erfindung liegt die Aufgabe zugrunde, ein verbessertes Verfahren und eine verbesserte Vorrichtung zum Zuführen einer thermoplastischen Kunststofffolie zu einer liegenden Glastafel bei der Herstellung von Verbundsicherheitsglasscheiben zu schaffen.

Die Aufgabe wird durch ein Verfahren gemäß Anspruch 1 und eine Vorrichtung mit den Merkmalen des Anspruchs 10 gelöst. Vorteilhafte Weiterbildungen sind Gegenstand der Unteransprüche.

Bei der Herstellung von Verbundsicherheitsglas wird eine erste Glastafel, insbesondere eine ebene Glastafel, auf eine Auflage gelegt, welche als Riemen- oder Rollenförderstrecke ausgebildet sein kann. Auf die erste Glastafel wird zumindest eine thermoplastische Kunststofffolie, insbesondere aus Polyvinylbutyral (PVB), aufgelegt, welche größer als die Glastafel ist, so dass die Folie alle Außenkanten der Glastafel überragt. Bei dem erfindungsgemäßen automatischen Verfahren werden zwei Maximalpositionen für einen seitlichen Rand der Folie in einem Abstand senkrecht zu einer Außenkante der Glastafel definiert, zwischen denen sich die Folie nach dem Ablegen auf der Glastafel befinden soll. Eine erste der beiden Maximalpositionen wird dabei so in Bezug auf die Außenkante der Glastafel definiert, dass der seitliche Rand der Folie nach dem Ablegen auf der Glastafel einen geringsten zulässigen Überstand über diese Außenkante aufweist. Die zweite Maximalposition wird so in Bezug auf die Außenkante der Glastafel definiert, dass der seitliche Rand der Folie nach dem Ablegen auf der Glastafel einen höchsten zulässigen Überstand über diese Außenkante aufweist. Die beiden Maximalpositionen werden durch zwei quer zur Laufrichtung der zugeführten Folie beabstandete Sensoren definiert. Die Folie wird von einer Vorratsrolle, auf der eine Folienbahn aufgewickelt ist, durch motorisches Drehen der Vorratsrolle abgerollt. Es ist eine Abrolleinrichtung zum Aufnehmen der Vorratsrolle vorgesehen, welche einen Antrieb zum Drehen der Vorratsrolle aufweist. Die Vorratsrolle sitzt auf einer Wickelwelle, welche drehbar gelagert sein kann. Die Wickelwelle ist mit dem Antrieb zum Drehen der Vorratsrolle gekoppelt und kann von diesem motorisch gedreht werden, insbesondere zum Abwickeln der Folienbahn. Der von der Vorratsrolle abgewickelte vordere Rand der Folie, welcher sich von der Vorratsrolle in Laufrichtung der Folienbahn wegbewegt, sowie die abgewickelte Folienbahn wird mit zumindest einem ihrer seitlichen Randbereiche durch ein Walzenpaar hindurchgeführt, dessen Walzen mit veränderbarer Anpresskraft gegeneinander gepresst werden können. Bevor der vordere Rand der Folie das Walzenpaar erreicht, wird eine erste der Walzen des Walzenpaares von der zweiten Walze des Walzenpaares abgehoben. Die erste Walze wird wieder an die zweite Walze und die zwischen ihnen liegende Folienbahn angedrückt, nachdem der vordere Rand der Folie das Walzenpaar passiert hat. Der vordere Rand der Folie wird dabei automatisch aufgrund der auf ihn wirkenden Schwerkraft bis zu dem Walzenpaar und durch das Walzenpaar hindurchgeführt. Die Abrolleinrichtung zum Aufnehmen der Vorratsrolle kann hierzu derart oberhalb eines Schachtes angeordnet und das Walzenpaar derart unterhalb des Schachtes angeordnet sein, dass ein von der Vorratsrolle abgewickelter vorderer Rand der Folie automatisch aufgrund der auf ihn wirkenden Schwerkraft durch den Schacht und das geöffnete Walzenpaar hindurchrutschen kann.

Die Vorrichtung enthält eine steuerbare Anpresseinrichtung, mit welcher die beiden Walzen beim Hindurchführen der Folienbahn mit veränderbarer Anpresskraft gegeneinander gepresst werden können. Die beiden Walzen des Walzenpaares weisen parallel zueinander liegende Drehachsen auf, welche parallel zur Folienbahn und schräg zur Laufrichtung der Folienbahn orientiert sind. Zumindest eine der Walzen des Walzenpaares wird motorisch rotiert, insbesondere mit einer Umfangsgeschwindigkeit, welche der von dem Antrieb der Vorratsrolle vorgegebenen Bewegungsgeschwindigkeit der Folienbahn in Laufrichtung entspricht. Hierzu ist diese Walze mit einem steuerbaren Antrieb gekoppelt. Während des Hindurchführens der Folienbahn durch das Walzenpaar wird die Anpresskraft der beiden Walzen verändert, so dass der seitliche Rand der sich in Laufrichtung bewegenden Folie zwischen den beiden zuvor definierten Maximalpositionen bleibt.

Der Winkel der Drehachsen der Walzen des Walzenpaares zu der Laufrichtung der Folie beträgt bevorzugt 70° bis 80° und ist so gerichtet, dass der seitliche Rand der Folie in eine erste Querrichtung bezüglich der Laufrichtung der Folie wandert, wenn die Anpresskraft der Walzen erhöht wird. Der seitliche Rand der Folienbahn wird an den beiden Sensoren vorbeibewegt. Wenn sich die Überdeckung des ersten der Sensoren durch die Folienbahn ändert, wird die Anpresskraft der beiden Walzen erhöht, so dass der seitliche Rand der Folienbahn in die erste Querrichtung wandert. Wenn sich die Überdeckung des zweiten Sensors durch die Folienbahn ändert, wird die Anpresskraft der beiden Walzen verringert. Der seitliche Rand der Folienbahn wandert dann nicht mehr weiter in die erste Querrichtung, sondern wandert insbesondere in eine zweite Querrichtung bezüglich der Laufrichtung der Folie, die entgegengesetzt zu der ersten Querrichtung gerichtet ist. Die Sensoren sind derart angeordnet, dass sich die Überdeckung des ersten Sensors durch die Folienbahn ändert, wenn der seitliche Rand der Folienbahn die erste Maximalposition erreicht, und sich die Überdeckung des zweiten Sensors durch die Folienbahn ändert, wenn der seitliche Rand der Folienbahn die zweite Maximalposition erreicht. Jeder Sensor ändert sein Signal in Abhängigkeit davon, ob er von der Folienbahn überdeckt wird oder nicht. Wenn sich der Rand der Folienbahn zwischen den beiden Sensoren befindet, ist der erste Sensor von der Folienbahn überdeckt und der zweite Sensor nicht von der Folienbahn überdeckt. Wandert nun der seitliche Rand der Folienbahn quer zur Laufrichtung, dann ändert sich die Überdeckung eines der Sensoren, sobald der Rand diesen Sensor erreicht hat. Durch das von diesem Sensor gelieferte Signal wird die Steuerung der Vorrichtung veranlasst, die Anpresskraft der Walzen des Walzenpaares zu verändern. Die Anpresskraft wird insbesondere dadurch verändert, dass die Anpresseinrichtung, beispielsweise ein Pneumatikzylinder, mit unterschiedlichen Drücken beaufschlagt wird. Bevorzugt kann die Anpresskraft durch Beaufschlagen der Anpresseinrichtung mit einem Druck erhöht und durch ein Drucklos-Schalten der Anpresseinrichtung verringert werden. Die Position des seitlichen Randes der Folienbahn wird somit beim automatischen Zuführen der Folie in Form einer Zweipunktregelung zwischen den beiden Maximalpositionen geregelt.

Die Vorrichtung kann eine Auflage für eine Glastafel und eine über der Auflage bewegbare Greifvorrichtung zum Greifen des vorderen Randes der Folie aufweisen. Die Vorrichtung kann eine, insbesondere entlang der Auflage beziehungsweise der Glastafel, verschiebbare Klemmvorrichtung zum Hindurchführen der Folie und zum Einklemmen der Folie durch Schließen der Klemmvorrichtung quer zur Laufrichtung enthalten. Nachdem der vordere Rand der Folie das Walzenpaar passiert hat, kann der vordere Rand der Folie weiter aufgrund der auf ihn wirkenden Schwerkraft durch die Vorrichtung geführt werden, und zwar durch die Klemmvorrichtung hindurch und bis in die geöffnete Greifvorrichtung hinein, welche den vorderen Rand der Folie dann ergreifen kann. Eine in Bezug zur Auflage schräg angeordnete Leiteinrichtung kann unterhalb des Walzenpaares angeordnet und in die geöffnete Klemmvorrichtung hineinschiebbar sein. Mit einer derartigen Anordnung kann gewährleistet werden, dass der vordere Rand der Folie automatisch und ohne manuelles Eingreifen aufgrund der auf ihn wirkenden Schwerkraft auf der Leiteinrichtung durch die geöffnete Klemmvorrichtung hindurch und bis in die geöffnete Greifvorrichtung hineinrutschen kann.

Die abgewickelte Folie wird über die Glastafel geführt. Hierzu kann die Greifvorrichtung für den vorderen Rand der Folie über die Glastafel hinweg bewegbar sein. Nachdem die benötigte Länge der Folie abgewickelt und die Greifvorrichtung über die Glastafel hinweg bewegt worden ist, wird das Drehen der Vorratsrolle und die Drehbewegung der Walzen des Walzenpaares gestoppt. Anschließend wird die Folie auf die Glastafel abgelegt, so dass sich der seitliche Rand der Folie zwischen den beiden Maximalpositionen befindet. Hierzu wird die Greifvorrichtung geöffnet, so dass der vordere Rand der Folie aus der Greifvorrichtung herausrutscht und sich die Folie auf die Glastafel legt. Abschließend wird die auf der Glastafel liegende Folie mit einer Schneidvorrichtung, welche insbesondere quer zur Laufrichtung der Folie verschiebbar ist, vom Vorrat abgeschnitten. Auf die Folie kann nun eine zweite Glastafel gelegt werden. Anschließend kann die über die Außenkanten der Glastafel herausragende Folie derart beschnitten werden, dass die Folie an allen Außenkanten einen gleichmäßigen Überstand aufweist. Das Paket aus den Glastafeln mit der dazwischenliegenden Folie kann dann in an sich bekannter Weise unter Wärmeeinwirkung zu einer Verbundsicherheitsglasscheibe verpresst werden. Alternativ können vor dem Verpressen noch weitere Glastafeln unter Zwischenlage einer oder mehrerer Folien aufgelegt werden. Die Folie bildet eine flexible Schicht zwischen den Glastafeln und bindet im Falle eines Bruches der fertigen Scheibe Glassplitter.

Die Erfindung hat wesentliche Vorteile:
- Die Folie lässt sich faltenfrei zuführen.
- Beim Ablegen der Folie auf der Glastafel wird sichergestellt, dass die Folie mit der erforderlichen Genauigkeit, welche durch den senkrecht zur Laufrichtung gemessenen Abstand der beiden Maximalpositionen vorgegeben wird, auf der Glastafel positioniert ist.
- Es wird vermieden, dass die auf der Glastafel abgelegte Folie nach dem Ablegen noch justiert werden muss. Ein nachträgliches Justieren hat den Nachteil, dass dabei die bereits auf der Oberfläche der Glastafel liegende Folie über deren Oberfläche hinweggezogen wird. Dies ist insbesondere dann nachteilig, wenn die Glastafel eine Beschichtung aufweist. Die verwendeten Beschichtungen sind teilweise empfindlich und können durch eine über die Oberfläche rutschende Folie beschädigt werden.
- Die vorliegende Erfindung akzeptiert, dass eine abgerollte und in Laufrichtung geförderte Folienbahn eine quer zur Laufrichtung gerichtete Wanderbewegung ausführt. Es wird nicht versucht, diese Wanderbewegung zu verhindern. Stattdessen wird das erfindungsgemäße, schräg zur Laufrichtung orientierte Walzenpaar eingesetzt, um eine geregelte Wanderbewegung der Folienbahn zu erzeugen. Das Walzenpaar zieht den seitlichen Rand der Folie in eine erste Querrichtung, indem die Walzen des Walzenpaares für eine gewisse Zeit stark gegeneinander gepresst werden. Anschließend wird die Pressung der beiden Walzen für eine gewisse Zeit gelöst, in welcher der seitliche Rand in eine zweite Querrichtung, die entgegengesetzt zu der ersten Querrichtung gerichtet ist, wandert. Es werden gezielt Wanderbewegungen quer zur Laufrichtung eingesetzt, um den seitlichen Rand der Folienbahn zwischen den beiden gewünschten Maximalpositionen zu halten.
- Durch das direkte motorische Drehen der Vorratsrolle kann diese sowohl in Laufrichtung als auch entgegen der Laufrichtung gedreht werden. Hierdurch kann die Folienbahn nach dem Abschneiden des auf die Glastafel abgelegten Abschnitts der Folie bis zu einer Referenzposition, welche beispielsweise durch einen den vorderen Rand der Folie detektierenden Sensor gebildet werden kann, zurückgezogen werden, wodurch die Genauigkeit der der Glastafel zugeführten Länge der Folie gesteigert und auch dauerhaft hoch gehalten werden kann. Außerdem kann nach dem Zurückziehen für die nachfolgend herzustellende Verbundsicherheitsglasscheibe automatisch eine andere Folie von einer Vorratsrolle anderer Breite zugeführt werden.
- Es ist kein manuelles Einfädeln des vorderen Randes der Folie in die Vorrichtung erforderlich, da der vordere Rand der Folie automatisch aufgrund der auf ihn wirkenden Schwerkraft bis in die Greifvorrichtung hinein rutschen kann. Die Anordnung der Abrolleinrichtung, des Schachtes, des Walzenpaares und der Greifvorrichtung ermöglichen, dass der vordere Rand der Folie ungefasst, insbesondere in frei hängender und/oder rutschender Weise, im Wesentlichen zugspannungsfrei zugeführt werden kann. Die verwendeten Folien sind, auch wenn sie eine Dicke von einigen Zehntelmillimetern, beispielsweise 0,38 mm, aufweisen, zugkraftempfindlich und können sich unter Zugkrafteinwirkung unzulässig verformen, so dass die Verbundsicherheitsglasscheibe mangelhaft wird. Mit der vorliegenden Erfindung lässt sich die Folie automatisch ohne äußere Zugspannungseinwirkung in die Vorrichtung einfädeln und der Glastafel zuführen. Es tritt lediglich eine geringe Zugspannungsbelastung der Folie durch das Eigengewicht der freihängenden Abschnitte der Folienbahn auf, welche nicht zu Beeinträchtigungen führt.
- Während des automatischen Zuführens des ungefassten vorderen Randes der Folie wird die Position des seitlichen Randes der Folienbahn bereits geregelt. Der vordere Rand der Folie erreicht somit die geöffnete Greifvorrichtung exakt in der gewünschten Position und wird von dieser auch so gegriffen.
- Es kann somit in sehr einfacher Weise eine genaue Positionierung der Folie auf der Glastafel gewährleistet werden.

In Kenntnis der Erfindung wurde die DE 36 12 096 A1 ermittelt, welche ein Verfahren zur Korrektur der Bewegungsrichtung eines bahnförmigen Materials offenbart, bei welchem die endlose Bahn bereits in eine Vorrichtung eingefädelt ist und von Rollen abgezogen wird. Die seitlichen Ränder der endlosen Bahn werden während ihrer Bewegung in Laufrichtung bezüglich eines seitlichen Auslaufens abgefühlt und bei Ermittlung des Auslaufens eines Randes wird der gegenüberliegende Rand mit einer entgegenwirkenden Zugkraft beaufschlagt. Die Vorrichtung weist an jedem Rand der Bahn paarweise vorgesehene Führungsrollen und Andruckrollen auf, welche frei drehbar sind und sich also lose mit der bewegten Bahn drehen. Die Rollen sind in der Laufrichtung nach außen schräggestellt und können zur Anlage mit dem bahnförmigen Material gebracht werden, um dadurch die Zugkraft aufzubringen. Ohne Vorsehen eines Antriebs für eine der Rollen kann allein auf Grund der vorgesehenen Schrägstellung die gewünschte Korrektur der Bewegungsrichtung vorgenommen werden. Das Verfahren und die Vorrichtung der DE 36 12 096 A1 sind gattungsfremd und zum Zuführen einer thermoplastischen Kunststofffolie von einer motorisch gedrehten Vorratsrolle zu einer Glastafel bei der Herstellung von Verbundsicherheitsglasscheiben, insbesondere zum automatischen Zuführen eines ungefassten vorderen Randes einer Folie, ungeeignet.

Bevorzugt wird nur ein seitlicher Rand im Bereich der Folienbahn durch ein Walzenpaar hindurchgeführt, welches parallel liegende Drehachsen aufweist, die parallel zur Folienbahn und schräg zur Laufrichtung orientiert sind. Vorteilhaft wird die Folienbahn nach der Vorratsrolle derart geführt, dass der seitliche Rand der Folie in eine zweite Querrichtung bezüglich der Laufrichtung der Folie wandert, die entgegengesetzt zu der ersten Querrichtung gerichtet ist, wenn die Anpresskraft der Walzen des Walzenpaares verringert wird. Hierzu kann die Folienbahn nach der Vorratsrolle über eine in Laufrichtung vor oder nach dem Walzenpaar angeordnete Umlenkwalze geführt werden. Insbesondere wird die Vorratsrolle derart ausgerichtet, dass der seitliche Rand der Folie in die zweite Querrichtung bezüglich der Laufrichtung der Folie wandert, wenn die Anpresskraft der Walzen des Walzenpaares verringert wird. Hierzu kann die Drehachse der Wickelwelle der Vorratsrolle nicht exakt im rechten Winkel zur Laufrichtung der Folienbahn orientiert sein. Die erste Querrichtung ist bevorzugt von der Mitte der Folienbahn zu dem seitlichen Rand der Folienbahn gerichtet, welcher durch das Walzenpaar hindurchläuft. Die Breite der Walzen des Walzenpaares beträgt etwa 25 mm bis 200 mm, insbesondere 50 mm bis 100 mm.

In Ausgestaltung der Erfindung kann die mit dem Antrieb gekoppelte Walze über einen Freilauf mit dem Antrieb gekoppelt sein. Der Freilauf kann eine Drehzahl der Walze erlauben, die höher als die vom Antrieb vorgegebene Drehzahl ist, wenn der vordere Rand der Folie bereits von der Greifvorrichtung gegriffen wurde. Sollte der Antrieb der Walze einmal eine Umfangsgeschwindigkeit an der Walze erzeugen, welche aufgrund von Toleranzen etwas geringer als die aufgrund der Bewegung der Greifvorrichtung entstehende Bewegungsgeschwindigkeit der Folienbahn in Laufrichtung sein, verhindert der Freilauf, dass die Folienbahn durch die angetriebene Walze im seitlichen Randbereich der Folienbahn abgebremst wird. Der Freilauf ermöglicht in diesem Fall ein Mitlaufen der Walze mit einer der Bewegungsgeschwindigkeit der Folie entsprechenden höheren Umfangsgeschwindigkeit.

In weiterer Ausgestaltung kann die Abrolleinrichtung zum Aufnehmen mehrerer Vorratsrollen ausgebildet sein, wobei für jede der Vorratsrollen ein separater Antrieb zum Drehen der jeweiligen Wickelwelle vorgesehen sein kann. Die Wickelwelle kann an zwei Stellen neben der Vorratsrolle drehbar gelagert sein. Jede Lagerung der Wickelwelle kann durch zwei frei drehbar gelagerte Stützrollen gebildet werden. So lässt sich eine leere Vorratsrolle sehr einfach gegen eine volle Vorratsrolle auswechseln. Die Wickelwelle mit der leeren Vorratsrolle wird vom Antrieb abgekoppelt und von den Stützrollen abgehoben, anschließend wird die Wickelwelle in eine volle Vorratsrolle eingesteckt und diese mit einer Hebeeinrichtung oder einem Kran auf die Stützrollen gehoben. Abschließend wird die Wickelwelle wieder mit dem Antrieb gekoppelt.

Weitere Vorteile und Merkmale ergeben sich aus der nachfolgenden Beschreibung eines Ausführungsbeispiels in Verbindung mit den Figuren. Es zeigen:
- Figur 1: eine schematische Seitenansicht auf eine Vorrichtung zum automatischen Zuführen und Ablegen einer Folie auf einer Glastafel,
- Figur 2: eine schematische Seitenansicht der Vorrichtung der Figur 1 zu einem anderen Zeitpunkt,
- Figur 3: eine schematische Draufsicht in Richtung des Pfeiles III auf einen Teil der Vorrichtung der Figur 1, wobei eine in Figur 1 schräg verlaufende Folienbahn und die zu ihr benachbarten Teile in die Zeichenebene geklappt wurden,
- Figur 4: eine schematische Draufsicht in Richtung des Pfeiles IV auf einen Teil der Vorrichtung der Figur 1,
- Figur 5: einen Querschnitt durch eine in der Vorrichtung der Figur 1 eingesetzte Klemmvorrichtung.

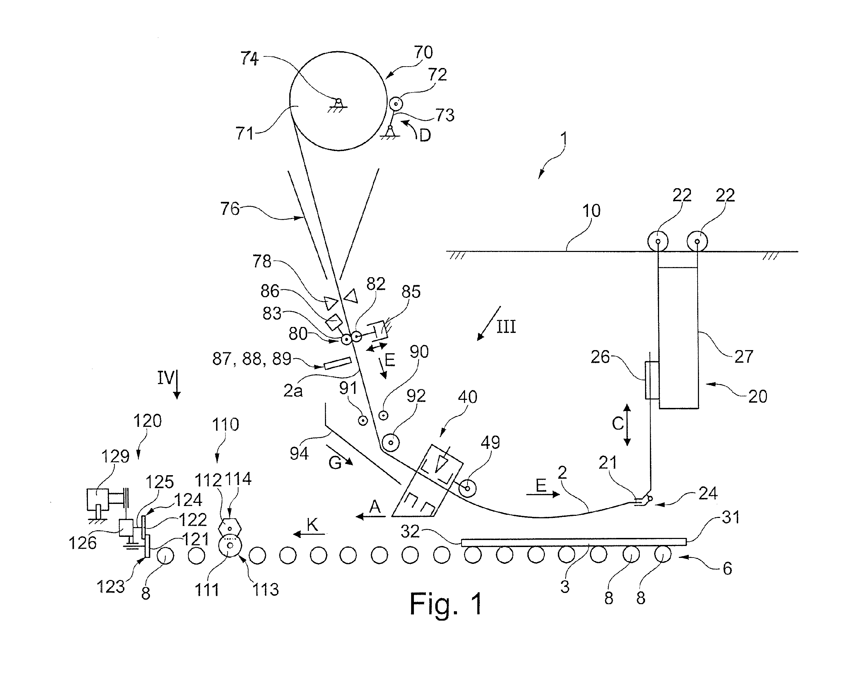

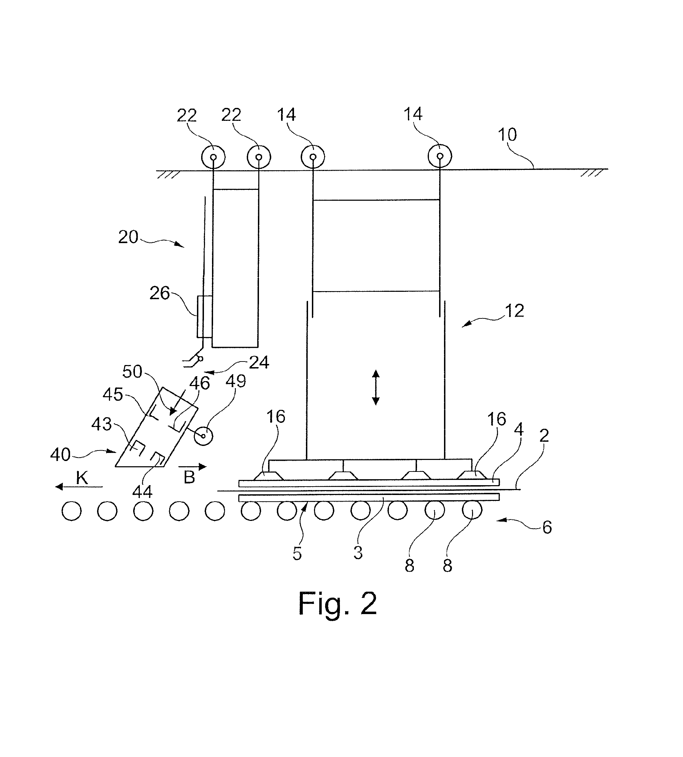

Eine in Figur 1 dargestellte Vorrichtung 1 zum automatischen Ablegen einer Folie 2 auf einer ebenen Glastafel 3 ist Teil einer Anlage zur Herstellung von Verbundsicherheitsglas. In der Vorrichtung 1 wird die Folie 2 einer ersten Glastafel 3 zugeführt und darauf abgelegt. Anschließend wird auf die Folie 2 eine zweite Glastafel 4 gelegt, siehe Figur 2. Auf das aus den Glastafeln 3, 4 und der Folie 2 gebildete Glastafelpaket 5 können optional weitere Folien und Glastafeln aufgelegt werden. Aus dem Glastafelpaket 5 wird anschließend durch ein an sich bekanntes Verpressen unter Wärmeeinwirkung eine Verbundsicherheitsglasscheibe hergestellt.

Die Vorrichtung 1 enthält eine Auflage 6, welche als Rollenförderstrecke ausgebildet ist und mehrere Rollen 8 enthält, deren Drehachsen in einer horizontalen Ebene liegen, siehe Figur 1. Die Vorrichtung 1 enthält parallel zur Auflage 6 angeordnete Laufschienen 10 und einen Glastafel-Greifer 12 zum Befördern der Glastafel 3 in die für das Ablegen der Folie 2 benötigte Position, siehe Figur 2. Der Glastafel-Greifer 12 weist Rollen 14 auf, mit denen er auf den Laufschienen 10 verfahrbar ist. Der Glastafel-Greifer 12 enthält Saugeinrichtungen 16, welche in ihrer Höhe über der Auflage 6 veränderbar sind. Ein derartiger Glastafel-Greifer 12 ist beispielsweise aus der DE 10 2012 111 669 A1 bekannt. Der Glastafel-Greifer 12 kann auf den Laufschienen 10 nach rechts in einen Bereich außerhalb der Figur 2 verfahren werden und dort die Glastafel 3 von einem Glastafel-Stapel holen und in der in Figur 1 dargestellten Position auf der Auflage 6 ablegen.

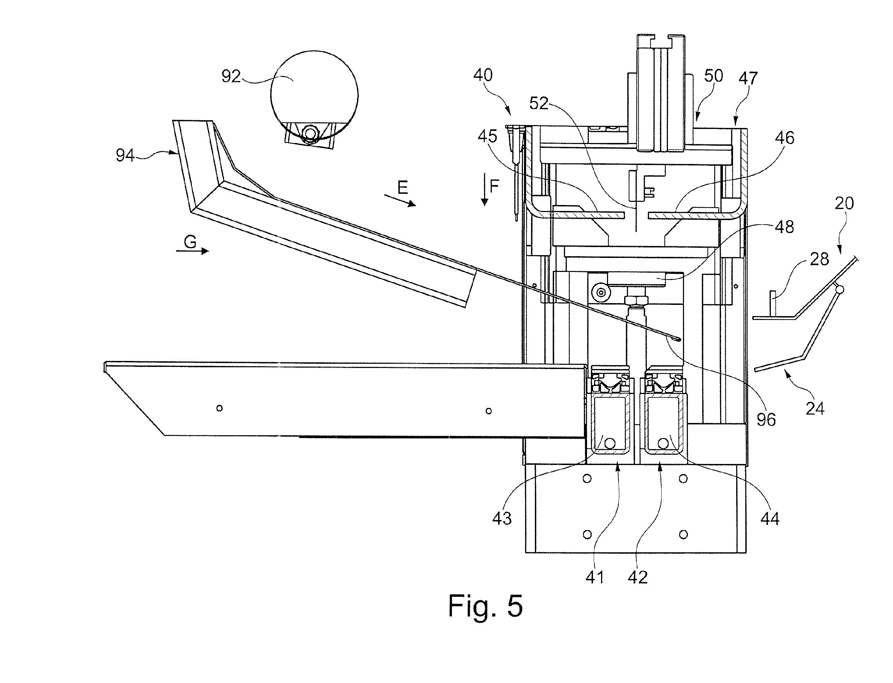

Die Vorrichtung 1 enthält eine Greifvorrichtung 20 für den vorderen Rand 21 der Folie 2 und eine Klemmvorrichtung 40 zum Hindurchführen der Folie 2 und zum Einklemmen der Folie 2. Die Greifvorrichtung 20 enthält Rollen 22, mit welchen die Greifvorrichtung 20 auf den Laufschienen 10 verfahrbar ist. Der Greifvorrichtung 20 ist ein gesteuerter Antrieb (nicht dargestellt) zum Verfahren der Greifvorrichtung 20 auf den Laufschienen 10 zugeordnet. Die Greifvorrichtung 20 enthält mehrere über die Breite der Folie 2 verteilte Greifzangen 24 welche durch nicht dargestellte Pneumatikzylinder geöffnet und geschlossen werden können. Die Höhe der Greifzangen 24 über der Auflage 6 ist in Richtung des Doppelpfeiles C veränderbar. Die Greifzangen 24 sind über eine Linearführung 26 an einem Rahmen 27 angebracht, an welchem auch die Rollen 22 der Greifvorrichtung 20 angebracht sind. An wenigstens einer der Greifzangen 24 ist ein Sensor 28 zum Detektieren des vorderen Randes 21 der Folie 2, siehe Figur 5.

Die Klemmvorrichtung 40 ist relativ zu der Auflage 6 in Richtung der Pfeile A und B verschiebbar. Während des Ablegens der Glastafel 3 durch den Glastafel-Greifer 12 auf der Auflage 6 befinden sich die Greifvorrichtung 20 und die Klemmvorrichtung 40 jeweils in einer Parkposition, welche in Figur 2 dargestellt ist, und in welcher die Greifvorrichtung 20 und die Klemmvorrichtung 40 den Glastafel-Greifer 12 nicht behindern. Nach dem Ablegen der Glastafel 3 durch den Glastafel-Greifer 12 wird dieser in Figur 2 nach rechts aus dem Bereich der Auflage 6 herausgefahren. Die Klemmvorrichtung 40 wird in Richtung des Pfeiles B in ihre in Figur 1 dargestellte Arbeitsposition oberhalb einer Außenkante 32 der Glastafel 3 verschoben.

Die Vorrichtung 1 enthält eine Abrolleinrichtung 70 zum Aufnehmen einer Vorratsrolle 71, auf der eine Folienbahn 2a aufgewickelt ist. Die Vorratsrolle 71 ist in der Abrolleinrichtung 70 drehbar gelagert und kann von einem nicht dargestellten Antrieb motorisch gedreht werden. Die Vorratsrolle 71 sitzt auf einer Wickelwelle 74, welche beidseitig neben der Vorratsrolle 71 auf nicht dargestellten Stützrollen gelagert und von dem nicht dargestellten Antriebsmotor der Abrolleinrichtung in beide Richtungen motorisch rotierbar ist. Alle in der Vorrichtung 1 verwendeten Antriebsmotoren sind steuerbar und können bevorzugt Servomotoren sein. Da der Antrieb der Vorratsrolle 71 über die Wickelwelle 74 erfolgt und der aktuelle Durchmesser der Vorratsrolle 71 variiert, enthält die Abrolleinrichtung 70 zur Bestimmung der Länge der abgewickelten Folie 2 ein Messrad 72, welches auf die Folie 2 aufgesetzt werden kann, an einem schwenkbaren Arm 73 gelagert ist und von einem nicht dargestellten Pneumatikzylinder in Richtung des Pfeiles D an die Vorratsrolle 71 angedrückt wird. Die Folie 2 wird durch Drehen der Vorratsrolle 71 in Laufrichtung E abgewickelt. Bei kleiner werdender Vorratsrolle wird der Arm 73 in Richtung des Pfeiles D geschwenkt, so dass das Messrad 72 stets die oberste Lage der Folie 2 auf der Vorratsrolle 71 berührt. Das Messrad 72 wird von der sich bewegenden Folie 2 mitgedreht. Die Drehbewegung des Messrades 72 wird über Sensoren erfasst, so dass in einer Steuerung der Vorrichtung 1 die Länge der abgewickelten Folie 2 aus der Drehbewegung und dem bekannten Umfang des Messrades 72 errechnet werden kann. Beim Abrollen der Folie 2 von der Vorratsrolle 71 wird der ungefasste vordere Rand 21 der Folie zunächst automatisch aufgrund der auf ihn wirkenden Schwerkraft durch einen Schacht 76 geführt. Dies hat den Vorteil, dass die Abrolleinrichtung 70 oberhalb der Ebene der Laufschienen 10 angeordnet ist, wo für die Abrolleinrichtung 70 genügend Platz vorhanden ist. Das Messrad 72 kann alternativ auch im Schacht 76 angeordnet sein und dort auf der Folienbahn 2a laufen. Anschließend kann die Folie 2 an Ionisierungsstäben 78 vorbeigeführt werden, welche sich über die Folienbreite erstrecken. Der vordere Rand 21 der Folie 2 wird anschließend automatisch aufgrund der auf ihn wirkenden Schwerkraft durch ein unten noch näher beschriebenes Walzenpaar 80 hindurchgeführt. Die Folie 2 wird durch voneinander beabstandete Walzen 90, 91 und an einer Umlenkwalze 92 vorbei geführt, indem der vordere Rand 21 der Folie 2 weiter durch die Vorrichtung 1 nach unten gleitet. Über eine Leiteinrichtung 94, welche unterhalb des Walzenpaares 80 und in Bezug zur Auflage 6 schräg angeordnet ist, gelangt der vordere Rand 21 der Folie 2 durch die geöffnete Klemmvorrichtung 40 hindurch zu der Greifvorrichtung 20. Der vordere Rand 21 der Folie 2 ist auf seinem Weg aus dem Schacht 76 bis zu der Greifvorrichtung 20 nicht gefasst und rutscht im Wesentlichen frei hängend - getrieben durch die auf ihn wirkende Schwerkraft - durch die Vorrichtung 1. Ein manuelles Einführen des vorderen Randes ist nicht erforderlich. Optional können nach Bedarf zwischen der Abrolleinrichtung 70 und dem Walzenpaar 80 weitere, nicht dargestellte Umlenkwalzen angeordnet sein. In dem Bereich, in welchem die Folienbahn 2a durch das Walzenpaar 80 hindurchgeführt wird, verläuft die Folienbahn 2a jedoch in einer Ebene, das heißt, die Folienbahn 2a verläuft ungekrümmt durch das Walzenpaar 80 und wird auch nicht durch das Walzenpaar 80 umgelenkt oder aus dieser Ebene ausgelenkt.

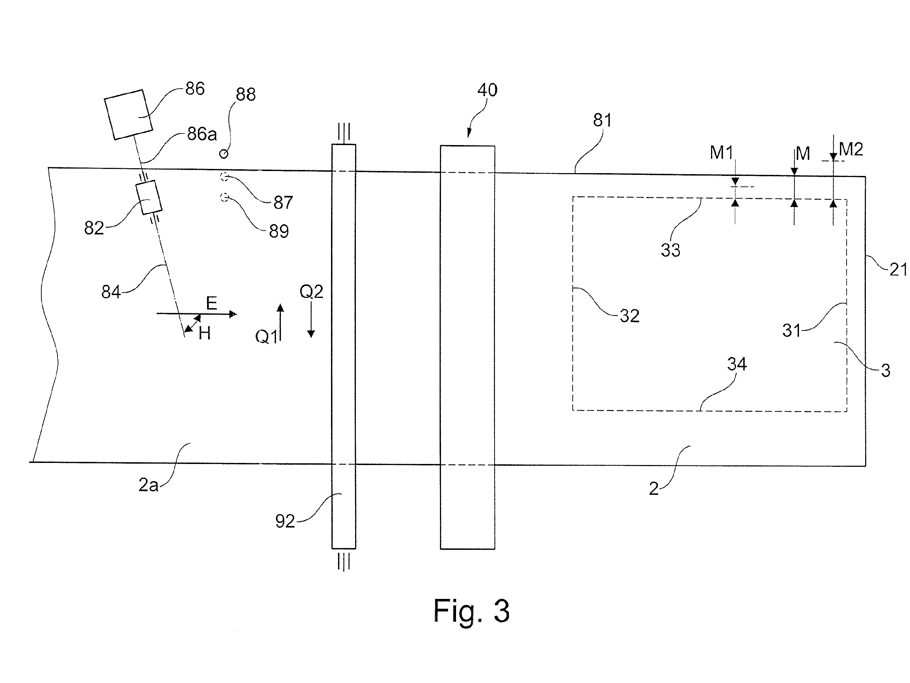

Die in den Figuren 1 und 2 schematisch dargestellte Klemmvorrichtung 40 erstreckt sich über die gesamte Breite der Folienbahn 2a, siehe Figur 3, und ist im Detail in Figur 5 erkennbar. Die Klemmvorrichtung 40 enthält zwei Klemmleistenpaare 41, 42 zum Einklemmen der Folie 2, welche sich quer zur Laufrichtung E jeweils über die gesamte Breite der Folie 2 erstrecken. Das Klemmleistenpaar 41 enthält zwei Klemmleisten 43, 45. Das Klemmleistenpaar 42 enthält zwei Klemmleisten 44, 46. Die Klemmleisten 43, 44, 45, 46 erstrecken sich jeweils quer zur Laufrichtung E über die gesamte Breite der Folie 2. Die oberen Klemmleisten 45, 46 sind an einem Träger 47 befestigt, welcher beweglich in der Klemmvorrichtung 40 angeordnet ist. Der Träger 47 ist mit einem Pneumatikzylinder 48 verbunden, von welchem der Träger 47 mit den Klemmleisten 45, 46 in Richtung des Pfeiles F auf die Klemmleisten 43, 44 zubewegt werden kann. In Figur 5 ist der geöffnete Zustand der Klemmvorrichtung 40 dargestellt. Im geschlossenen Zustand der Klemmvorrichtung 40 berührt die Klemmleiste 45 die Klemmleiste 43 und die Klemmleiste 46 die Klemmleiste 44, so dass die durch die Klemmvorrichtung 40 hindurchgeführte Folie 2 sowohl von dem Klemmleistenpaar 41 als auch von dem Klemmleistenpaar 42 quer zur Laufrichtung E über die gesamte Breite eingeklemmt wird.

An dem Träger 47 ist eine Schneideinrichtung 50 angeordnet, welche quer zur Laufrichtung E entlang des Trägers 47 bewegbar ist. Die Schneideinrichtung 50 enthält ein Messer 52, welches im geschlossenen Zustand der Klemmvorrichtung 40 bis in den Bereich zwischen den beiden Klemmleisten 43 und 44 hineinragt und so die zwischen den Klemmleisten 43, 45 und 44, 46 geklemmte Folie durchtrennt, wenn die Schneideinrichtung 50 quer zur Laufrichtung E bewegt wird. An der der Auflage 6 zugewandten Seite der Klemmvorrichtung 40 ist eine Führungswalze 49 frei drehbar gelagert, siehe Figuren 1 und 2. In Figur 5 ist ferner die Leiteinrichtung 94 erkennbar, welche entlang des Pfeiles G ein in die geöffnete Klemmvorrichtung 40 schiebbar ist. In der Darstellung der Figur 5 ist die Leiteinrichtung 94 mit ihrem Leitblech 96 bereits teilweise in die geöffnete Klemmvorrichtung 40 eingeschoben, um den vorderen Rand 21 der Folie 2 durch die geöffnete Klemmvorrichtung 40 hindurchzuleiten. In Figur 5 ist ferner die in Laufrichtung E hinter der geöffneten Klemmvorrichtung 40 positionierte Greifvorrichtung 20 mit geöffneten Greifzangen 24 schematisch angedeutet. Wenn der vordere Rand 21 der in Figur 5 nicht dargestellten Folie 2 den Sensor 28 erreicht, wird die Greifvorrichtung 20 geschlossen und die Greifzangen 24 greifen den vorderen Rand 21.

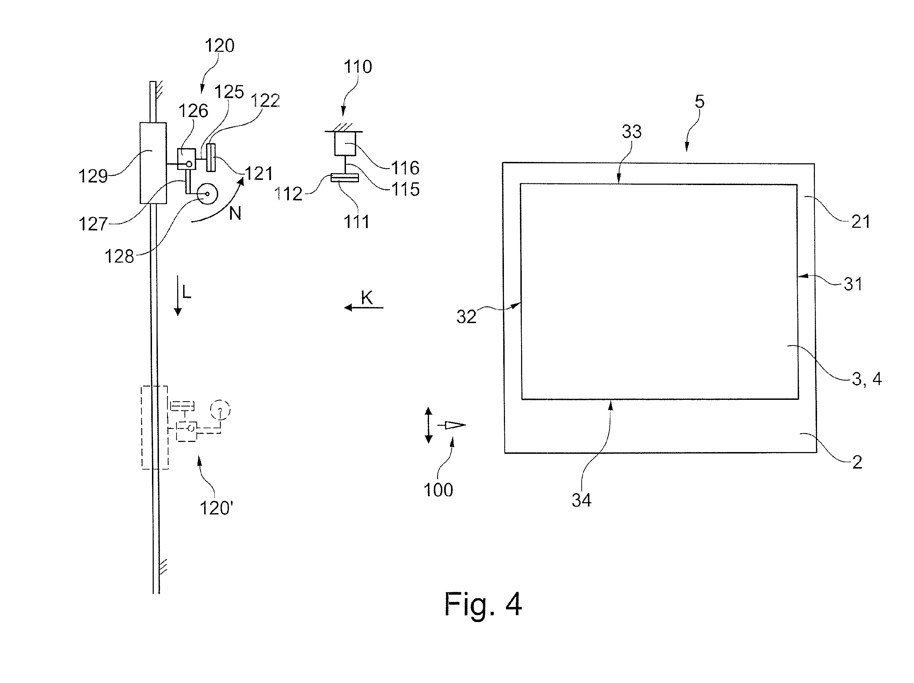

Die Folie 2 soll so auf die Glastafel 3 abgelegt werden, dass die Folie 2 die Glastafel 3 an allen Außenkanten 31, 32, 33, 34 der Glastafel 3 überragt, siehe insbesondere Figuren 3 und 4. Die Breite der Folie 2 wird anhand der Breite der Glastafel 3 ausgewählt. Die Abrolleinrichtung 70 kann mehrere nicht dargestellte Vorratsrollen enthalten, auf welchen Folienbahnen 2a unterschiedlicher Breite aufgewickelt sind. Nach dem Ablegen der Glastafel 3 auf der Auflage 6 kann die Breite der Glastafel 3 durch eine nicht dargestellte Messeinrichtung gemessen werden. Anhand der gemessenen Breite der Glastafel 3 wird eine passende Vorratsrolle 71 ausgewählt. Die Folie 2 soll so auf der Glastafel 3 abgelegt werden, dass ein seitlicher Rand 81 der Folie 2 einen Abstand M senkrecht zu einer Außenkante 33 der Glastafel 3 aufweist, welcher zwischen einer ersten Maximalposition M1 und einer zweiten Maximalposition M2 liegt, siehe Figur 3. Die Maximalposition M1 wird so gewählt, dass der seitliche Rand 81 der Folie 2 nach dem Ablegen auf der Glastafel 3 einen geringsten zulässigen Überstand über die Außenkanten 33 aufweist. Die Maximalposition M2 wird so definiert, dass der seitliche Rand 81 einen höchsten zulässigen Überstand über die Außenkante 33 aufweist. M1 beträgt bevorzugt 20 mm oder mehr, M2 beträgt bevorzugt 40 mm oder weniger. Die Folie 2 ist somit der Glastafel 3 so zuzuführen, dass der seitliche Rand 81 ständig zwischen den beiden Maximalpositionen M1 und M2 liegt.

Der Abstand der Vorratsrolle 71 zu der Glastafel 3 kann aufgrund der Größe der Vorrichtung 1 mehrere Meter betragen und beispielsweise zwischen 5 Meter und 10 Meter liegen. Damit der seitliche Rand 81 die Glastafel 3 in einer Position M zwischen den beiden Maximalpositionen M1 und M2 erreicht, wird die Position M des seitlichen Randes 81 während des Zuführens der Folie 2, und zwar insbesondere bereits während des Zuführens des vorderen Randes 21 der Folie 2 bis zur Greifvorrichtung 20, geregelt. Hierzu dient das Walzenpaar 80, durch welches der seitliche Randbereich 81 der Folienbahn 2a hindurchgeführt wird. Das Walzenpaar 80 enthält eine erste Walze 82, welche frei drehbar gelagert und von der zweiten Walze 83 des Walzenpaares 80 abgehoben werden kann. Die zweite Walze 83 ist mit einem in den Figuren 1 und 3 angedeuteten Antrieb 86 zum Rotieren der Walze 83 über eine Antriebswelle 86a gekoppelt, wobei die Walze 83 in Figur 3 nicht sichtbar ist, da sie genau hinter der Walze 82 liegt. Die Walze 83 ist über einen nicht dargestellten Freilauf mit der Antriebswelle 86a gekoppelt, welcher eine Drehzahl der Walze 83 erlaubt, die höher als die vom Antrieb 86 vorgegebene Drehzahl ist. Der Freilauf bildet eine nur in einer Drehrichtung drehfeste Verbindung zwischen dem Antrieb 86 und der Walze 83. Die Walze 82 kann durch die Anpresseinrichtung 85 gegen die zweite Walze 83 des Walzenpaares 80 gepresst werden. Die Anpresseinrichtung 85 kann durch einen Pneumatikzylinder gebildet werden und ist so steuerbar, so dass die Anpresskraft, mit welcher die beiden Walzen 82, 83 gegeneinander gepresst werden, verändert werden kann. Die Walze 82 kann durch die Anpresseinrichtung 85 außerdem von der zweiten Walze 83 abgehoben werden, um den vorderen Rand 21 der Folienbahn 2a leichter durch das Walzenpaar 80 hindurchführen zu können. Die Drehachsen 84 der Walzen 82 und 83 sind parallel zueinander, parallel zur Folienbahn 2a und in einem Winkel H, siehe Figur 3, schräg zur Laufrichtung E der Folienbahn 2a orientiert. Der Winkel H liegt etwa im Bereich von 70° bis 80°. Die Walzen 82, 83 können eine Breite von etwa 50 mm bis 100 mm und einen Durchmesser von etwa 50 mm bis 100 mm haben. Jede der Walzen 82, 83 weist einen Bezug aus einem gummielastischen Material auf, damit die Folienbahn 2a nicht beschädigt wird.

Dem Walzenpaar 80 sind zur Regelung der Position M des seitlichen Randes 81 der Folie 2 drei Sensoren 87, 88, 89 zugeordnet, siehe Figur 3. Der erste Sensor 87 ist derart bezüglich des seitlichen Randes 81 der Folienbahn 2a angeordnet, dass er die erste Maximalposition M1 definiert. Der zweite Sensor 88 ist quer zur Laufrichtung E beabstandet zu dem ersten Sensor 87 angeordnet und definiert die zweite Maximalposition M2. Jeder der Sensoren 87, 88, 89 liefert ein Signal, wenn sich seine Überdeckung durch die Folienbahn 2a ändert. Der in der Position M zwischen den Maximalpositionen M1 und M2 liegende seitliche Rand 81 der Folienbahn 2a überdeckt den ersten Sensor 87, während der zweite Sensor 88 von dem seitlichen Rand 81 der Folienbahn 2a nicht überdeckt wird. Der seitliche Rand 81 liegt somit zwischen den beiden Sensoren 87, 88. Der dritte Sensor 89 ist vorgesehen, damit das Vorhandensein einer Folienbahn 2a auch dann erkannt wird, wenn weder der erste Sensor 87 noch der zweite Sensor 88 von dem seitlichen Rand 81 überdeckt wird. Durch die in dem Winkel H schräg zur Laufrichtung E gerichteten Drehachsen 84 der Walzen 82, 83 wird der seitliche Rand 81 der Folie 2 in eine erste Querrichtung Q1 gezogen, wenn die Anpresseinrichtung 85 mit Druck beaufschlagt und dadurch die Anpresskraft der Walze 82 gegen die Walze 83 erhöht wird. Während der Bewegung der Folienbahn 2a in Laufrichtung E wird dadurch erreicht, dass der seitliche Rand 81 in Querrichtung Q1 wandert. Wird die Anpresskraft der Walze 82 verringert, beispielsweise indem die Anpresseinrichtung 85 drucklos geschaltet wird, wird die Wanderbewegung in Querrichtung Q1 beendet. Die Folienbahn 2a wird nach der Vorratsrolle 71 so geführt, dass der seitliche Rand 81 der Folie 2 in Querrichtung Q2 wandert, wenn die Anpresskraft der Walzen 82, 83 verringert wird. Durch eine definierte geringfügige Schrägstellung der Wickelwelle 74, der Umlenkwalze 92 oder weiterer nicht dargestellter Umlenkwalzen, kann die Folienbahn 2a so geführt werden, dass der seitliche Rand 81 eine Wanderbewegung in Querrichtung Q2 ausführt, wenn die Walze 82 nicht oder nur mit einer sehr geringen Anpresskraft gegen die Walze 83 gedrückt wird, zum Beispiel weil die Anpresseinrichtung 85 drucklos geschaltet ist. Mit dem Walzenpaar 80, der Anpresseinrichtung 85 und den Sensoren 87, 88 wird eine Zweipunktregelung für die Position M des seitlichen Randes 81 in Bezug auf die Außenkante 33 der Glastafel 3 durchgeführt.

Bei dem automatischen Verfahren zum Zuführen und Ablegen der Folie 2 wird zunächst die Glastafel 3 auf die Auflage 6 gelegt. Die Glastafel 3 wird während des Zuführens und Ablegens der Folie 2 auf der Auflage 6 nicht mehr bewegt. Anschließend wird die Klemmvorrichtung 40 aus ihrer Parkposition, siehe Figur 2, in Richtung des Pfeiles B in ihre in Figur 1 dargestellte Arbeitsposition oberhalb der Außenkante 32 der Glastafel 3 gefahren. Das Leitblech 96 der Leiteinrichtung 94 wird in Richtung G in die geöffnete Klemmvorrichtung 40 eingeschoben, siehe Figur 5. In Abwandlung zu der in Figur 5 dargestellten Position der Leiteinrichtung 94 kann das Leitblech 96 auch noch weiter in Richtung G durch die Klemmvorrichtung 40 hindurchgeschoben werden, so dass der Abstand von dem Leitblech 96 zu den Greifzangen 24 minimiert wird. Die Greifvorrichtung 20 wird aus ihrer Parkposition, siehe Figur 2, in Laufrichtung E hinter die in ihrer Arbeitsposition stehende Klemmvorrichtung 40 gefahren, so dass das Leitblech 96 der Leiteinrichtung 94 in die geöffneten Greifzangen 24 der Greifvorrichtung 20 gerichtet ist, siehe Figur 5.

Die Folie 2 wird von der Vorratsrolle 71 abgerollt, indem die Vorratsrolle 71 über die Wickelwelle 74 motorisch gedreht wird. Dabei wird die Länge der abgerollten Folie 2 durch das Messrad 72 gemessen. Der sich von der Vorratsrolle 71 in Laufrichtung E bewegende vordere Rand 21 der Folie 2 rutscht aufgrund der Schwerkraft durch den Schacht 76 und das Walzenpaar 80 hindurch. Bevor der vordere Rand 21 das Walzenpaar 80 erreicht, wird die Walze 82 von der Walze 83 abgehoben und die Walze 83 wird durch den Antrieb 86 in Rotation versetzt, wobei die Umfangsgeschwindigkeit der motorisch gedrehten Walze 83 der Bewegungsgeschwindigkeit der Folienbahn 2a in Laufrichtung E entspricht. Nachdem der vordere Rand 21 das Walzenpaar 80 passiert hat, wird die Walze 82 wieder auf die Walze 83 und die zwischen ihnen liegende Folienbahn 2a aufgesetzt.

Wenn der vordere Rand 21 den Sensor 89 passiert hat, wird die Position M des seitlichen Randes 81 der Folie 2 durch die Zweipunktregelung geregelt. Dies wird insbesondere durch das motorische Drehen der Walze 83 ermöglicht, da der vordere Rand 21 die Greifvorrichtung 20 noch nicht erreicht hat und noch frei in der Vorrichtung 1 hängt. Stellt der Sensor 87 fest, dass der seitliche Rand 81 den Sensor 87 nicht überdeckt, so wird durch Versorgen der Anpresseinrichtung 85 mit Druckluft die Anpresskraft auf einen hohen Wert geschaltet, so dass die Folienbahn 2a in Querrichtung Q1 wandert. Dies kann unmittelbar der Fall sein, wenn der Sensor 89 den vorderen Rand 21 der Folie 2 erkannt hat, sich der seitliche Rand 81 jedoch zwischen den Sensoren 89 und 87 befindet. Es kann auch sein, dass sich der seitliche Rand 81 der Folienbahn 2a zunächst in der in Figur 3 dargestellten Position zwischen den beiden Sensoren 87 und 88 oder sogar über dem Sensor 88 befindet. Der Sensor 87 erkennt dann gleichzeitig mit dem Sensor 89 den vorderen Rand 21 der Folienbahn und die Anpresskraft wird zunächst nicht auf einem hohen Wert geschaltet, so dass das Walzenpaar 80 noch keine Zugkraft in Querrichtung Q1 ausübt. Durch die entsprechende

Einstellung beispielsweise der Wickelwelle 74 oder später auch der Umlenkwalze 92 wandert der seitliche Rand 81 nun langsam in Querrichtung Q2, wenn die Folienbahn 2a weiter in Laufrichtung E durch die Vorrichtung 1 geführt wird. Nach einiger Zeit ist der seitliche Rand 81 über den Sensor 87 in Richtung Q2 hinausgewandert. Von dem Sensor 87 wird erkannt, dass der seitliche Rand 81 den Sensor 87 nicht mehr überdeckt und seine Maximalposition M1 erreicht hat. Jetzt wird der Anpresseinrichtung 85 ein Signal gegeben und die Walze 82 mit hoher Anpresskraft gegen die Walze 83 und die dazwischenliegende Folienbahn 2a angepresst, so dass das Walzenpaar 80 durch die angetriebene Walze 83 und seine im Winkel H schräggestellten Drehachsen 84 eine Zugkraft in Querrichtung Q1 auf den seitlichen Rand 81 der Folienbahn 2a ausübt. Während der weiteren Bewegung der Folienbahn 2a in Laufrichtung E wandert dabei nun der seitliche Rand 81 in Querrichtung Q1. Erreicht der seitliche Rand 81 seine Maximalposition M2 bzw. den zweiten Sensor 88, so dass dieser von der Folienbahn 2a überdeckt wird, gibt dieser ein Signal an die Anpresseinrichtung 85 und die von ihr ausgeübte Anpresskraft wird auf einen niedrigen Wert verringert. Bevorzugt wird die Anpresseinrichtung 85 hierzu drucklos geschaltet. Es wird dann keine Zugkraft mehr von dem Walzenpaar 80 in Richtung Q1 auf die Folienbahn 2a ausgeübt, so dass diese langsam wieder in Querrichtung Q2 wandert. Sobald der Rand 21 der Folienbahn 2a den ersten Sensor 87 erreicht und sich dort die Überdeckung ändert, wird die Anpresskraft der Walze 82 wieder erhöht. Diese Zweipunktregelung wird während des gesamten weiteren Zuführens der Folie 2 zu der Glastafel 3 ausgeführt.

Der durch das Walzenpaar 80 hindurchgeführte vordere Rand 21 der Folie 2 wird nach dem Walzenpaar 80 weiter automatisch aufgrund der auf ihn wirkenden Schwerkraft zwischen Walzen 90, 91 hindurch und an der Umlenkwalze 92 vorbei geführt. Anschließend wird die Folie mittels der Leiteinrichtung 94 durch die geöffnete Klemmvorrichtung 40 bis in die geöffnete Greifvorrichtung 20 geführt und zwar indem der vordere Rand 21 über die Leiteinrichtung 94 rutscht, siehe auch Figur 5. Erkennt der Sensor 28, dass sich der vordere Rand 21 der Folie 2 in den Greifzangen 24 befindet, werden die Greifzangen 24 geschlossen, Das automatische Einfädeln des ungefassten vorderen Randes 21 der Folie 2 aufgrund der Schwerkraft ist nun beendet. Aufgrund der durchgeführten Regelung der Position des seitlichen Randes 81 liegt dieser beim Greifen des vorderen Randes 21 präzise in seiner gewünschten Position und die Genauigkeit beim nachfolgenden Ablegen der Folie 2 auf der Glastafel 3 wird erhöht.

Wenn der vordere Rand 21 der Folie 2 durch die Greifvorrichtung 20 gegriffen wurde, wird die Leiteinrichtung 94 entgegen der Richtung G wieder aus der geöffneten Klemmvorrichtung 40 herausgefahren. Die geschlossene Greifvorrichtung 20 mit dem darin gehaltenen vorderen Rand 21 der Folie 2 wird in Laufrichtung E von der geöffneten Klemmvorrichtung 40 wegbewegt. Die Greifvorrichtung 20 wird in einem Abstand oberhalb der Auflage 6 beziehungsweise der Glastafel 3 in Laufrichtung E bewegt, siehe Figur 1. Dadurch wird die Folie 2 über die Glastafel 3 hinweggeführt, ohne dass die Folie 2 die Glastafel 3 berührt. Die Bewegungsgeschwindigkeit der Greifvorrichtung 20 in Laufrichtung E ist auf die Bewegungsgeschwindigkeit der Folienbahn 2a in Laufrichtung E abgestimmt, so dass die Folie 2 zwischen der Klemmvorrichtung 40 beziehungsweise der Führungswalze 49 und der Greifvorrichtung 20 höchstens soweit durchhängt, dass der tiefste Punkt der durchhängenden Folie 2 die Glastafel 3 noch nicht berührt. Dies ist wichtig, damit eine eventuell auf der Glastafel 3 vorhandene empfindliche Oberflächenbeschichtung nicht durch die sich in Laufrichtung E bewegende Folie 2 beschädigt wird. Um eine Berührung der Folie 2 mit der Glastafel 3 zu verhindern, kann die Höhe der Greifzangen 24 über der Auflage 6 während der Bewegung der Greifvorrichtung in Laufrichtung E verändert werden, siehe Verschieberichtung C.

Nachdem eine entsprechend der Länge der Glastafel 3 gewählte Länge der Folienbahn 2a abgerollt wurde und die Greifvorrichtung 20 ihre Endposition oberhalb der Außenkante 31 der Glastafel 3 erreicht hat, wird das Drehen der Vorratsrolle 71 und die Bewegung der Greifvorrichtung 20 gestoppt. Nun wird die Klemmvorrichtung 40 in Richtung F geschlossen und die Folie 2 wird von den Klemmleistenpaaren 41, 42 eingeklemmt. Das vordere Ende 21 der Folie 2 wird durch Öffnen der Greifzangen 24 auf der Glastafel 3 abgelegt. Gegebenenfalls kann die Höhe der Greifzangen 24 über der Auflage 6 vor dem Öffnen der Greifzangen 24 verringert werden. Die Folie 2 wird von dem aus der Folienbahn 2a und der Vorratsrolle 71 gebildeten Vorrat durch die Schneideinrichtung 50 entlang der Klemmvorrichtung 40 abgeschnitten. Anschließend wird die Klemmvorrichtung 40 durch Abheben der Klemmleisten 45 und 46 von den Klemmleisten 43 und 44 entgegen der Pfeilrichtung F geöffnet. Das in dem Klemmleistenpaar 42 geklemmte Ende der Folie 2 rutscht beim Öffnen von selbst aus der Klemmvorrichtung 40 heraus und legt sich auf die Glastafel 3 ab. Die Folie 2 befindet sich nun in der in Figur 2 dargestellten Lage auf der Glastafel 3, wobei die Folie 2 wie in Figur 4 dargestellt, alle Außenkanten 31, 32, 33, 34 der Glastafel 3 überragt und an der Außenkante 33 aufgrund des durchgeführten Regelungsverfahrens eine Position M aufweist, welche zwischen den beiden Maximalpositionen M1 und M2 liegt.

Im Anschluss an das Ablegen der Folie 2 wird die Vorratsrolle 71 über die Wickelwelle 74 motorisch entgegen der Abrollrichtung gedreht, so dass die Folienbahn 2a entgegen der Laufrichtung E aus der Klemmvorrichtung 40 gezogen und wieder auf die Vorratsrolle 71 aufgewickelt wird. Dabei kann der nach dem Abschneiden gebildete neue vordere Rand bis zu einer Referenzposition, beispielsweise in dem Schacht 76 oder in der Abrolleinrichtung 70, zurückgezogen werden, um für einen späteren Ablegevorgang bereitzustehen. Die Klemmvorrichtung 40 wird in Richtung A in ihre in Figur 2 dargestellte Parkposition zurückgefahren. Die Greifvorrichtung 20 wird ebenfalls in ihre in Figur 2 dargestellte Parkposition zurückgefahren. Nun wird mit dem Glastafel-Greifer 12 die Glastafel 4 auf die Folie 2 abgelegt. Anschließend wird das Glastafelpaket aus den beiden Glastafeln 3, 4 mit der dazwischen liegenden Folie 2 durch motorisches Drehen der Rollen 8 in Transportrichtung K von der Auflage 6 wegbefördert und zu Schneidvorrichtungen 100, 110 und 120 zum automatischen Abschneiden der über die Außenkanten 31, 32, 33, 34 der Glastafel 3 herausragenden Folie 2 transportiert, siehe Figuren 1 und 4. Wenn die Folie 2 sehr weit über die Außenkante 34 herausragt, wird bevorzugt durch eine Schneidvorrichtung 100 zunächst ein "Grobschnitt" durchgeführt, bei dem die Folie 2 in einem Abstand von etwa 40 mm zur Außenkante 34 abgeschnitten wird. Weil mit der Schneidvorrichtung 100 lediglich ein Grobschnitt in einem relativ großen Abstand zur Außenkante 34 ausgeführt wird, werden an die Ausgestaltung der Schneidvorrichtung 100 keine besonderen Anforderungen gestellt. Die Schneidvorrichtung 100 kann in an sich bekannter Weise oder analog der Schneidvorrichtungen 110 oder 120 ausgebildet sein. Der Grobschnitt mit der Schneidvorrichtung 100 erleichtert das exakte Abscheiden der über die Außenkante 34 herausragenden Folie 2 in der unten noch näher beschriebenen Schneidvorrichtung 120, da dann von der Schneidvorrichtung 120 nur noch ein schmaler Folienstreifen abgeschnitten werden muss, welcher sich an der Schneidvorrichtung 120 insbesondere leichter entsorgen lässt.

Das Glastafelpaket 5 wird mit der Außenkante 33 an einer ortsfest angeordneten Schneidvorrichtung 110 vorbeigeführt. Die Schneidvorrichtung 110 enthält ein scheibenförmiges Untermesser 111 und ein scheibenförmiges Obermesser 112. Jedes der Messer 111, 112 hat eine entlang seines äußeren Umfangs umlaufende Schneide 113, 114 und ist drehbar um eine Drehachse gelagert. Die beiden Messer 111, 112 sind so zueinander angeordnet, dass die beiden Schneiden 113, 114 sich zumindest an einem Punkt berühren. Das Obermesser 112 ist drehfest mit einer Antriebswelle 115 verbunden, welche von einem Motor 116 antreibbar ist. Der Motor 116 kann das Obermesser 112 in eine Rotation um dessen Drehachse versetzen. Das Untermesser 111 ist frei drehbar gelagert. Wie in Figur 1 erkennbar ist, überdecken sich die Flanken der beiden Messer 111 und 112 abschnittsweise, um ein scherenartiges aneinander Entlanggleiten der Schneiden 113, 114 zum Durchtrennen der Folie 2 zu ermöglichen. Die Schneide 114 hat entlang ihrer Drehachse gesehen eine von der Kreisform abweichende Form, beispielsweise die Form eines Sechsecks. Die Schneide 113 ist entlang ihrer Drehachse gesehen kreisförmig. Mit der Schneidvorrichtung 110 kann die Folie 2 sehr exakt und mit hoher Schnittqualität in einem gleichmäßigen Abstand zu der Außenkante 33 abgeschnitten werden.

In Transportrichtung K nach der Schneidvorrichtung 110 ist eine weitere Schneidvorrichtung 120 angeordnet, mit welcher die Folie 2 an den Außenkanten 32, 34 und 31 abgeschnitten wird. Die Schneidvorrichtung 120 enthält in gleicher Weise wie die Schneidvorrichtung 110 ein scheibenförmiges Untermesser 121 und ein scheibenförmiges Obermesser 122 mit Schneiden 123, 124, wobei die Schneide 113 kreisförmig ist und die Schneide 124, wie die Schneide 114, die Form eines Vielecks aufweist. Das Untermesser 121 ist frei drehbar gelagert und das Obermesser 122 ist über eine Antriebswelle 125 von einem Motor 126 antreibbar. An einem Träger 127 der Schneidvorrichtung 120 ist zumindest eine drehbar gelagerte Führungsrolle 128 zum Anlegen an eine Außenkante 32 der Glastafel 3 angeordnet. Der Träger 127 ist schwenkbar an einer Linearführung 129 befestigt, welche sich quer zur Transportrichtung K erstreckt und mittels welcher die Schneidvorrichtung 120 in Richtung des Pfeiles L entlang der Außenkante 32 verschoben werden kann.

Das Glastafelpaket 5 wird so weit in Transportrichtung K bewegt, bis die Außenkante 32 an der Führungsrolle 128 anliegt. Das Glastafelpaket 5 wird in dieser Position angehalten. Nun wird die Schneidvorrichtung 120 in Richtung L an der Außenkante 32 entlang geführt und die über die Außenkante 32 herausragende Folie 2 von den Messern 121 und 122 abgeschnitten. Die Führungsrolle 128 gewährleistet, dass die Messer 121 und 122 keine der Glastafeln 3, 4 berühren. Anschließend wird die Schneidvorrichtung 120 um 90° in Pfeilrichtung N in die in Figur 4 gestrichelt dargestellte und mit dem Bezugszeichen 120' bezeichnete Position verschwenkt. Die Führungsrolle 128 wird dann an die Außenkante 34 angelegt und das Glastafelpaket 5 wird in Transportrichtung K an der in der Position 120' verbleibenden Schneidvorrichtung 120 vorbeigeführt. Dabei wird die über die Außenkante 34 herausragende Folie 2 abgeschnitten. Anschließend wird die Schneidvorrichtung 120 noch einmal um 90° in Richtung N weitergeschwenkt, so dass durch ein Zurückfahren der Schneidvorrichtung 120 entlang der Linearführung 129 entgegen der Pfeilrichtung L die über die Außenkante 31 herausragende Folie 2 abgeschnitten werden kann. Die Vorrichtung 120 wird schließlich um 180° in ihre Ausgangslage zurückgeschwenkt. Danach wird das Glastafelpaket 5 in Transportrichtung K einer nicht dargestellten Heiz- und Pressvorrichtung zugeführt.

**Bezugszeichenliste**

| | | | |
|---|---|---|---|
| 1 | Vorrichtung | 50 | Schneideinrichtung |
| 2 | Folie | 52 | Messer |
| 2a | Folienbahn | 70 | Abrolleinrichtung |
| 3 | Glastafel | 71 | Vorratsrolle |
| 4 | Glastafel | 72 | Messrad |
| 5 | Glastafelpaket | 73 | schwenkbarer Arm |
| 6 | Auflage | 74 | Wickelwelle |
| 8 | Rollen | 76 | Schacht |
| 10 | Laufschienen | 78 | Ionisierungsstäbe |
| 12 | Glastafel-Greifer | 80 | Walzenpaar |
| 14 | Rollen | 81 | seitlicher Rand |
| 16 | Saugeinrichtungen | 82 | erste Walze |
| 20 | Greifvorrichtung | 83 | zweite Walze |
| 21 | vorderer Rand | 84 | Drehachsen |
| 24 | Greifzangen | 85 | Anpresseinrichtung |
| 26 | Linearführung | 86 | Antrieb |
| 27 | Rahmen | 86a | Antriebswelle |
| 28 | Sensor | 87 | Sensor |
| 31 | Außenkante | 88 | Sensor |
| 32 | Außenkante | 89 | Sensor |
| 33 | Außenkante | 90 | Walze |
| 34 | Außenkante | 91 | Walze |
| 40 | Klemmvorrichtung | 92 | Umlenkwalze |
| 41 | Klemmleistenpaar | 94 | Leiteinrichtung |
| 42 | Klemmleistenpaar | 96 | Leitblech |
| 43 | Klemmleiste | 100 | Schneidvorrichtung |
| 44 | Klemmleiste | 110 | Schneidvorrichtung |
| 45 | Klemmleiste | 111 | scheibenförmiges Untermesser |
| 46 | Klemmleiste | 112 | scheibenförmiges Obermesser |
| 47 | Träger | 113 | Schneide |
| 48 | Pneumatikzylinder | 114 | Schneide |
| 49 | Führungswalze | 115 | Antriebswelle |
| 116 | Motor | | |
| 120 | Schneidvorrichtung | | |
| 121 | scheibenförmiges Untermesser | | |
| 122 | scheibenförmiges Obermesser | | |
| 123 | Schneide | | |
| 124 | Schneide | | |
| 125 | Antriebswelle | | |
| 126 | Motor | | |
| 127 | Träger | | |
| 128 | Führungsrolle | | |
| 129 | Linearführung | | |
| | | | |
| A | Verschieberichtung | | |
| B | Verschieberichtung | | |
| C | Verschieberichtung | | |
| D | Schwenkrichtung | | |
| E | Laufrichtung | | |
| F | Schließrichtung | | |
| G | Einschieberichtung | | |
| H | Winkel | | |
| K | Transportrichtung | | |
| L | Verschieberichtung | | |
| M | Abstand | | |
| M1 | erste Maximalposition | | |
| M2 | zweite Maximalposition | | |
| N | Schwenkrichtung | | |
| Q1 | erste Querrichtung | | |
| Q2 | zweite Querrichtung | | |

## Patentansprüche

1. Verfahren zum automatischen Zuführen einer thermoplastischen Kunststofffolie (2) von einer drehbar gelagerten Vorratsrolle (71) zu einer liegenden Glastafel (3) bei der Herstellung von Verbundsicherheitsglasscheiben mit folgenden Schritten:
• Definieren von zwei Maximalpositionen (M1, M2) für einen seitlichen Rand (81) der Folie (2) in einem Abstand senkrecht zu einer Außenkante (33) der Glastafel (3), zwischen denen sich der seitliche Rand (81) der Folie (2) nach dem Ablegen auf der Glastafel (3) befinden soll;
• Abrollen der Folie (2) von einer Vorratsrolle (71), auf der eine Folienbahn (2a) aufgewickelt ist, durch motorisches Drehen der Vorratsrolle (71);
• Hindurchführen zumindest eines seitlichen Randbereichs (81) der Folienbahn (2a) durch ein Walzenpaar (80), dessen Walzen (82, 83) mit veränderbarer Anpresskraft gegeneinander gepresst werden können und parallel zueinander liegende Drehachsen (84) aufweisen, welche parallel zur Folienbahn (2a) und schräg zur Laufrichtung (E) der Folienbahn (2a) orientiert sind;
• Motorisches Rotieren von zumindest einer der Walzen (83);
• Abheben einer ersten der Walzen (82) des Walzenpaares (80) von der zweiten Walze (83) des Walzenpaares (80), bevor der vordere Rand (21) der Folie (2) das Walzenpaar (80) erreicht;
• Andrücken der ersten Walze (82) an die zweite Walze (83) und die zwischen ihnen liegende Folienbahn (2a), nachdem der vordere Rand (21) der Folie (2) das Walzenpaar (80) passiert hat;
• Verändern der Anpresskraft der beiden Walzen (82, 83) während des Hindurchführens der Folienbahn (2a) durch das Walzenpaar (80), so dass der seitliche Rand (81) der sich in Laufrichtung (E) bewegenden Folie (2) zwischen den beiden zuvor definierten Maximalpositionen (M1, M2) bleibt;
• Führen der Folie (2) über die Glastafel (3);
• Stoppen des Drehens der Vorratsrolle (71) und der Drehbewegung der Walzen (82, 83) des Walzenpaares (80);
• Ablegen der Folie (2) auf die Glastafel (3);
• Abschneiden der auf der Glastafel (3) liegenden Folie (2) vom Vorrat (2a, 71).

2. Verfahren nach Anspruch 1, in welchem der Winkel (H) der Drehachsen (84) der Walzen (82, 83) so gerichtet ist, dass der seitliche Rand (81) der Folie (2) in eine erste Querrichtung (Q1) bezüglich der Laufrichtung (E) der Folienbahn (2a) wandert, wenn die Anpresskraft der Walzen (82, 83) erhöht wird.

3. Verfahren nach Anspruch 2, in welchem nur ein seitlicher Randbereich (81) der Folienbahn (2a) durch ein Walzenpaar (80) hindurchgeführt wird, welches parallel zueinander liegende Drehachsen (84) aufweist, die parallel zur Folienbahn (2a) und schräg zur Laufrichtung (E) orientiert sind; und in welchem die Folienbahn (2a) derart geführt wird, dass der seitliche Rand (81) der Folie (2) in eine zweite Querrichtung (Q2) bezüglich der Laufrichtung (E) der Folie (2) wandert, die entgegengesetzt zu der ersten Querrichtung (Q1) gerichtet ist, wenn die Anpresskraft der Walzen (82, 83) verringert wird.

4. Verfahren nach einem der vorstehenden Ansprüche, in welchem die Vorratsrolle (71) auf einer Wickelwelle (74) sitzt, welche zum Abwickeln der Folienbahn (2a) motorisch gedreht wird.

5. Verfahren nach einem der Ansprüche 2 bis 4, in welchem die erste Querrichtung (Q1) von der Mitte der Folienbahn (2a) zu dem seitlichen Rand (81) der Folienbahn (2a) gerichtet ist, welcher durch das Walzenpaar (80) hindurchläuft.

6. Verfahren nach einem der Ansprüche 2 bis 5 mit folgenden weiteren Schritten:
• Vorbeibewegen des seitlichen Randbereichs (81) der Folienbahn (2a) an zwei quer zur Laufrichtung (E) beabstandeten Sensoren (87, 88), welche die beiden Maximalpositionen (M1, M2) des Randes (81) definieren;
• Erhöhen der Anpresskraft der beiden Walzen (82, 83), wenn sich die Überdeckung des ersten der Sensoren (87) durch die Folienbahn (2a) ändert, so dass der seitliche Rand (81) der Folienbahn (2a) in die erste Querrichtung (Q1) wandert,
• Verringern der Anpresskraft der beiden Walzen (82, 83), wenn sich die Überdeckung des zweiten Sensors (88) durch die Folienbahn (2a) ändert.

7. Verfahren nach einem der vorstehenden Ansprüche, in welchem die Umfangsgeschwindigkeit der motorisch gedrehten Walze (83) des Walzenpaares (80) der Bewegungsgeschwindigkeit der Folienbahn (2a) in Laufrichtung (E) entspricht.

8. Verfahren nach einem der vorstehenden Ansprüche, in welchem der vordere Rand (21) der Folie (2) automatisch aufgrund der auf ihn wirkenden Schwerkraft durch das Walzenpaar (80) hindurchgeführt wird.

9. Verfahren nach einem der vorstehenden Ansprüche, in welchem eine erste (M1) der beiden Maximalpositionen (M1, M2) so in Bezug auf die Außenkante (33) der Glastafel (3) definiert ist, dass der seitliche Rand (81) der Folie (2) nach dem Ablegen auf der Glastafel (3) einen geringsten zulässigen Überstand über diese Außenkante (33) aufweist; und
in welchem die zweite Maximalposition (M2) so in Bezug auf die Außenkante (33) der Glastafel (3) definiert ist, dass der seitliche Rand (81) der Folie (2) nach dem Ablegen auf der Glastafel (3) einen höchsten zulässigen Überstand über diese Außenkante (33) aufweist.

10. Vorrichtung (1) zum automatischen Zuführen einer thermoplastischen Kunststofffolie (2) von einer drehbar gelagerten Vorratsrolle (71) zu einer liegenden Glastafel (3) bei der Herstellung von Verbundsicherheitsglasscheiben mit folgenden Merkmalen:
• einer Abrolleinrichtung (70) zum Aufnehmen einer Vorratsrolle (71) mit einem Antrieb zum Drehen der Vorratsrolle (71);
• einer Schneideinrichtung (50) zum Abschneiden der auf der Glastafel (3) liegenden Folie (2) vom Vorrat (2a, 71);
• zwei quer zur Laufrichtung (E) der abgewickelten Folienbahn (2a) beabstandete Sensoren (87, 88), welche zwei Maximalpositionen (M1, M2) für einen seitlichen Rand (81) der Folie (2) in einem Abstand senkrecht zu einer Außenkante (33) der Glastafel (3) definieren, so dass die Folie (2) nach dem Ablegen auf der Glastafel (3) über diese Außenkante (33) der Glastafel (3) hinausragt;
• zumindest einem Walzenpaar (80) zum Hindurchführen eines seitlichen Randbereichs (81) der Folienbahn (2a), welches parallel zueinander liegende Drehachsen (84) aufweist, die parallel zur Folienbahn (2a) und schräg zur Laufrichtung (E) der Folienbahn (2a) orientiert sind;
• einem mit einer der Walzen (83) gekoppelten Antrieb (86) zum motorischen Rotieren der Walze (83); und
• einer steuerbaren Anpresseinrichtung (85), mit welcher die beiden Walzen (82, 83) mit veränderbarer Anpresskraft gegeneinander gepresst werden können.

11. Vorrichtung nach Anspruch 10, in welcher die mit dem Antrieb (86) gekoppelte Walze (83) über einen Freilauf mit dem Antrieb (86) gekoppelt ist;
und in welcher der Freilauf eine Drehzahl der Walze (83) erlaubt, die höher als die vom Antrieb (86) vorgegebene Drehzahl ist.

12. Vorrichtung nach Anspruch 10 oder 11, in welcher die Breite der Walzen (82, 83) 25 mm bis 200 mm beträgt.

13. Vorrichtung nach einem der Ansprüche 10 bis 12, mit folgenden weiteren Merkmalen:
• einer Auflage (6) für eine Glastafel (3);
• einer über der Auflage (6) bewegbaren Greifvorrichtung (20) zum Greifen des vorderen Randes (21) der Folie (2);
• einer, insbesondere entlang der Auflage (6), verschiebbaren Klemmvorrichtung (40) zum Hindurchführen der Folie (2) und zum Einklemmen der Folie (2) durch Schließen der Klemmvorrichtung (40) quer zur Laufrichtung (E); und
• einer in Bezug zur Auflage (6) schräg angeordneten Leiteinrichtung (94), welche unterhalb des Walzenpaares (80) angeordnet und in die geöffnete Klemmvorrichtung (40) hineinschiebbar ist.

14. Vorrichtung nach einem der Ansprüche 10 bis 13, in welcher die Abrolleinrichtung (70) zum Aufnehmen der Vorratsrolle (71) derart oberhalb eines Schachtes (76) angeordnet und das Walzenpaar (80) derart unterhalb des Schachtes (76) angeordnet ist, dass ein von der Vorratsrolle (71) abgewickelter vorderer Rand (21) der Folie (2) automatisch aufgrund der auf ihn wirkenden Schwerkraft durch den Schacht (76) und das Walzenpaar (80) hindurchrutschen kann.

15. Vorrichtung nach einem der Ansprüche 10 bis 14, in welcher die Abrolleinrichtung (70) eine Wickelwelle (74) zum Aufnehmen der Vorratsrolle (71) aufweist, welche mit dem Antrieb zum Drehen der Vorratsrolle (71) gekoppelt ist.
